# EUROPEAN PATENT SPECIFICATION

(11) **EP 4 431 403 B1**
(45) Date of publication and mention of the grant of the patent: **23.09.2026**
(21) Application number: 23162417.2
(22) Date of filing: 16.03.2023
(51) Int. Cl.: B64F 5/10

(54) **VEHICLE WITH A CABIN COMPRISING AN ADAPTIVE RAIL SYSTEM**
FAHRZEUG MIT EINER KABINE MIT ADAPTIVEM SCHIENENSYSTEM
VÉHICULE AVEC UNE CABINE COMPRENANT UN SYSTÈME DE RAIL ADAPTATIF

(43) Date of publication of application: 18.09.2024
(73) Proprietor: Airbus Operations GmbH, 21129 Hamburg (DE)
(72) Inventor: Benthien, Hermann, 21129 Hamburg (DE); Hegenbart, Matthias, 21129 Hamburg (DE)
(74) Representative: Airbus Germany

(56) References cited:
- DE-A1- 102020 103 436
- US-A1- 2013 126 673
- US-A1- 2016 130 016
- US-A1- 2020 094 937

## Description

### Technical Field

The present invention relates to a vehicle with a cabin comprising an adaptive rail system, a method for installing a module in a cabin.

### Background

The installation of a module in a cabin of a vehicle is limited by space and the weight or handleability of the module and can be a challenging task. The difficulties can arise due to several reasons, including the weight of the module, limited space available, and the need for precise placement.

As a result, the weight of the module can be a major challenge. Heavy modules require specialized equipment and expertise to handle them safely. Without proper equipment, installation can be hazardous to the installer and damage the module or the vehicle.

The limited space available in the cabin can make it difficult to install the module precisely. In some cases, it may be impossible to fit the module in the available space, requiring modifications to the vehicle or the module. Precise placement is essential for the module to function properly and not interfere with other components of the vehicle.

Furthermore, the installation of heavy modules requires the expertise of professionals who are familiar with the equipment and techniques involved. Mistakes in the installation process can lead to costly repairs.

In conclusion, the installation of heavy modules in the cabin of a vehicle with limited space is a complex and challenging task. It requires specialized equipment, expertise, and careful consideration of the space available. A professional installer is recommended for the safe and successful installation of heavy modules in vehicles.

Hence, the installation of a module in a cabin of a vehicle can be cumbersome for workers due to the handleability and weight of the module. Heavy modules can cause inconveniences if not handled properly during installation.. Moreover, workers may encounter difficulties in maneuvering the module in limited space. It is essential to ensure that workers are properly trained and equipped with the necessary tools and equipment to handle heavy modules safely.

US 2013/0126673 A1 relates to a rail system for use when assembling a component in an aircraft comprises a first rail element having a securing device which is designed to be complementary to a first securing device provided in the region of a floor of an aircraft fuselage element and is adapted to cooperate with the first securing device in order to releasably secure the first rail element in the region of the floor of the aircraft fuselage element, wherein a section of the first rail element projects beyond an edge of the floor of the aircraft fuselage element in the connected state of the first rail element and the aircraft fuselage element.

DE 10 2020 103 436 A1 relates to a device and a method for attaching a cabin component to a primary structure of an aircraft. To enable a simple and precise attachment, an automated assembly device is supported at distributed points of the primary structure. A first detection unit of the assembly device is fixed to a section of a fastening element that is attached to the primary structure. A section intended for fastening the cabin component is held in place using a second detection unit of the assembly device, and this second detection unit is then moved accordingly.

US 2016/0130016 A1 relates to a method for attaching a component to a fuselage section of an aircraft or spacecraft. In a step of the method, a rail is arranged within a fuselage section of an aircraft, which rail extends in a longitudinal direction of the fuselage section. In another step, a support structure is movably mounted to the rail such that the support structure can be moved along the rail in the longitudinal direction of the fuselage section. The support structure comprises a positioning unit for positioning a tool for attaching the component to the fuselage section at a location where the component is to be attached to the fuselage section. The embodiments also relate to a device for attaching a component to a fuselage section of an aircraft.

US 2020/0094937 A1 proposes a method for installing system components in a portion of an aircraft fuselage. The method provides at least one planar structural arrangement to be secured on or in the aircraft fuselage, secures system components on the structural arrangement, couples system lines to the system components and arranges the system lines on the structural arrangement. The method includes positioning of the structural arrangement with the system components and system lines arranged thereon at designated installation location of the structural arrangement, and mechanical coupling of the structural arrangement to the aircraft fuselage.

### Summary of the invention

It is therefore an object to facilitate the installation of a module in a cabin of a vehicle to handle heavy modules safely.

This object is achieved by means of the subjects of the independent claims. Illustrative embodiments will be found in the dependent claims and the following description.

According to one aspect, a vehicle with a cabin comprising an adaptive rail system is provided. The cabin comprises a connection area adapted to hold the adaptive rail system. The adaptive rail system comprises a rail interface, configured to be attachable to the connection area. The adaptive rail system further comprises two installation rails, configured to be attachable to the rail interface. The adaptive rail system further comprises a jig, wherein the jig is connected to the two installation rails in a moveable manner, such that a module attached to the jig is movable inside the cabin. The cabin comprises a conic section, and the two installation rails are configured to follow a shape of the conic section of the cabin.

In other words, the cabin features a designated connection area designed to accommodate the adaptive rail system, which comprises a rail interface capable of attaching to the connection area. In addition, the adaptive rail system includes two installation rails that can be fastened to the rail interface. The adaptive rail system also includes a jig that can be movably connected to the installation rails, allowing a module affixed to the jig to be repositioned within the cabin.

A cabin is an enclosed structure, typically found on a vehicle, aircraft, or ship, that provides a space for passengers, crew, or goods. It can vary in size and shape, but generally refers to a compartment or room that is designed to be a comfortable or functional living or working space within the larger structure. Cabins can be found in various settings, such as a cabin on a vehicle.

A vehicle is a means of transportation used for moving people or goods from one place to another. Vehicles can be powered by various sources, such as engines fueled by gasoline, diesel, or electricity. Examples of vehicles include cars, trucks, buses, boats, airplanes, and trains. Vehicles are designed and built for specific purposes and come in a wide variety of shapes, sizes, and types depending on their intended use.

A rail system is a set of tracks or rails designed for guiding objects that move along them. Rail systems can be used for transportation of people, goods, or both. They can be powered or unpowered or gravity-fed conveyors. Rail systems are often used for efficient and reliable movement of modules or people. They can be found in various settings.

A rail interface refers to a component of a rail system that enables connection and attachment of different rail components, such as rails or fixtures. The rail interface is designed to securely hold the rail components in place, while allowing for easy and safe assembly and disassembly. Rail interfaces can come in various forms, such as connectors, clamps, or fasteners, and are typically designed to fit a specific rail system or standard. The rail interface plays an important role in ensuring the stability, safety, and functionality of the rail system as a whole.

A jig is a specialized tool or fixture that holds and guides a workpiece during a manufacturing, assembly, or inspection process. It is typically used to ensure consistent and accurate positioning of the workpiece and to aid in the execution of a specific operation or task. Jigs are often custom-designed and built to suit the specific requirements of a particular manufacturing or assembly process. They can be simple or complex in design, and can be made of various materials, such as metal, plastic, or wood. Jigs are commonly used in industries such as automotive, aerospace, and electronics manufacturing, where precision and repeatability are important.

"Movable" means able to be moved or capable of being moved from one place to another. It refers to something that can be changed in position, location or direction by physical means. Movable objects can be lifted, carried, rolled, or transported from one place to another. The term "movable" is often used in contrast to "fixed" or "immovable," which describes something that cannot be moved or is permanently attached to a specific location.

In the context of a vehicle, a module refers to a self-contained unit or component that can be added or removed as needed to enhance or modify the vehicle's functionality or performance. A module can be a physical component, such as an engine, transmission, or entertainment system, or it can be a software module that provides additional features or capabilities to the vehicle's existing software systems. Modules are designed to be easily installed or removed from the vehicle, often with minimal disruption to the rest of the vehicle's systems. This modular approach allows for greater flexibility in vehicle design and customization, and can help to reduce maintenance and repair costs by allowing specific components to be easily replaced or upgraded.

According to one embodiment, the jig comprises a jig rail, wherein the jig rail is adapted to move the jig in a direction along an axis different to an axis defined by the two installation rails.

According to one embodiment, the jig comprises a wheel based jig carrier, wherein the wheel based jig carrier is adapted to guide the jig along the axis defined by the two installation rails.

A wheel-based jig carrier is a type of device or equipment used in manufacturing or assembly processes that involves the movement of a workpiece or component from one station to another. The carrier consists of a framework or structure that supports a series of wheels or rollers, which enable the carrier to move along a track or floor. The carrier is designed to hold a jig, which in turn holds the workpiece or component in a fixed position, allowing it to be moved from one station to another while maintaining a consistent position and orientation. Wheel-based jig carriers can be used in a wide range of manufacturing or installing processes. They can be powered or non-powered, and can be manually or automatically controlled.

According to one embodiment, the jig comprises a motorized linear actuator. A motorized linear actuator is a device that converts rotational motion from an electric motor into linear motion along a straight line. It is typically used to control the position or movement of a load, such as a door, valve, or robotic arm. The linear actuator preferably comprises a motor, a gearbox, a lead screw or ball screw, and a linear slide mechanism. The motor drives the gearbox, which in turn rotates the screw, causing the slide to move along the linear path. Linear actuators can be powered by various types of electric motors, such as DC or stepper motors, and can be controlled using various feedback mechanisms, such as encoders or limit switches. They are commonly used in industrial automation, robotics, and other applications that require precise and repeatable linear motion. Preferably, the jig is movable in three dimensions.

According to one embodiment, the jig comprises a mobile robot unit.

A mobile robot unit is a type of robot that is designed to move autonomously or semi-autonomously from one location to another. The robot unit typically consists of a mobile platform or chassis, which is equipped with sensors, controllers, and actuators that allow it to navigate and interact with its environment. The platform can be driven by wheels, tracks, or legs, depending on the application and terrain.

Mobile robot units can be used in a wide range of applications. They can be programmed to perform a variety of tasks, such as transporting modules, performing inspections, or providing surveillance. Mobile robot units can be controlled using various methods, including remote control, autonomous navigation algorithms, or a combination of both. They may also be equipped with additional sensors, such as cameras or lidar, to aid in navigation and object detection.

According to the claimed invention, the cabin comprises a conic section and the at least one installation rail is two installation rails, wherein the two installation rails are configured to follow a shape of the conic section of the cabin.

In other words, the cabin features a conic section and is equipped with two installation rails that are designed to conform to the shape of the cabin's conic section.

According to one embodiment, the jig is adaptable in length and/or height and/or width, such that the jig is movable along the conic section of the cabin. Due to the adaptability of the jig, the outer dimensions of the jig can be adjusted in such a manner, that the jig can be guided along the rails in any type of conicity. The adjustment in length and/or height and/or width is preferably enabled by mechanical means like an electric motor, which operate a substructure of the jig to change the shape of the jig. A substructure is a structure that allows a movement of parts of the jig relative to one another. The adjustment of the jig may also be enabled manually, for instance by shifting or relocating the substructure or other elements of the jig by hand. For instance, the adaptability is advantageous in conic shapes of a fuselage of an aircraft.

According to one embodiment, the jig comprises a crane, wherein the crane is adapted to lift the jig in a height adjustable manner.

A jig is a type of device used in manufacturing and assembly processes to hold a module or component in place during machining, welding, or other operations. It is often designed to be easily movable or adjustable, allowing it to accommodate different workpieces or process requirements. One common feature of jigs is the use of a crane to lift and move the jig to different positions.

In some cases, the crane itself may be incorporated into the design of the jig. This type of jig is often referred to as a crane jig, and it typically features a crane that is adapted to lift the jig in a height-adjustable manner. The crane may be mounted on a vertical column or mast, which can be raised or lowered to adjust the height of the jig.

The height-adjustable feature of the crane jig is particularly useful in applications where the module or component being machined or assembled is large or heavy, or where it needs to be positioned at a specific height or angle. By using a crane that is adapted to lift the jig in a height-adjustable manner, the operator can easily adjust the position of the workpiece or component to achieve the desired result.

Overall, the crane jig is a versatile and adaptable tool that is commonly used in a variety of manufacturing and assembly processes. It allows operators to hold workpieces securely in place while also providing the flexibility to move and adjust the workpiece as needed.

According to one embodiment, wherein the rail interface is connected to a cross beam of the vehicle.

A cross beam is a structural component used in construction and engineering applications to support loads across a span or gap. It typically consists of a horizontal beam that is positioned perpendicular to the direction of the load, and is designed to transfer the load to vertical supports such as columns, walls or posts.

Cross beams are commonly used in vehicles to provide additional support and stability. They may be made of a variety of materials, depending on the application and load requirements.

In some cases, cross beams may be reinforced with additional materials such as steel plates or brackets to increase their load-bearing capacity. They may also be designed to have a specific shape or profile to accommodate different types of loads or to fit within a particular engineering design.

Overall, cross beams play an important role in the construction of many types of structures, and are a key element in ensuring the stability and safety of engineered systems.

According to one embodiment, wherein the vehicle is an aircraft.

An aircraft is a vehicle that is designed to be able to fly through the air. There are many different types of aircraft, including airplanes, helicopters, blimps, and drones, each with their own unique characteristics and capabilities. They can vary greatly in size, from small personal aircraft to commercial airliners that can carry hundreds of passengers.

The design and operation of aircraft are subject to strict regulations and safety standards, as they involve complex systems and high speeds. As a result, the manufacturing and maintenance of aircraft are highly specialized fields, requiring skilled professionals and rigorous quality control measures.

According to one embodiment, the aircraft comprises a floor structure, wherein the floor structure comprises the connection area.

The floor structure in an aircraft refers to the system of components that support the cabin floor and provide a sturdy foundation for passenger seating, cargo storage, and other equipment. The floor structure typically includes a series of floor beams and stringers that run the length of the aircraft cabin, as well as floor panels that are attached to these beams and provide a flat surface for passengers to walk on.

The floor structure must be designed to meet stringent safety requirements, as it plays an important role in protecting passengers and crew in the event of an emergency landing or turbulence. It must be able to withstand significant stresses and forces, including the weight of passengers and cargo, as well as the impact of sudden movements or jolts.

In addition to providing structural support, the floor structure may also include a variety of systems and components to enhance the comfort and safety of passengers. These may include soundproofing materials to reduce noise levels, heating and cooling systems to maintain a comfortable temperature, and lighting and emergency evacuation systems to guide passengers in the event of an emergency.

Overall, the floor structure is a critical component of aircraft design, contributing to the safety, comfort, and functionality of the cabin environment. It requires careful engineering and construction to ensure that it meets the demanding requirements of aviation safety standards.

According to one embodiment, wherein the aircraft comprises a triangle module defined by a fuselage and vertical struts, arranged in a lower part of the aircraft, wherein the module to be installed is configured to be installed in the triangle module.

In other words, the lower part of the aircraft features a triangle module which is defined by a fuselage and vertical struts. This module provides a stable foundation for various components to be installed within the aircraft. A separate module is designed to be installed specifically within this triangle module, ensuring a secure and integrated fit. By utilizing the available space efficiently, the aircraft can optimize its design and functionality, providing a safe and comfortable environment for passengers and crew.

According to one embodiment, wherein the module is selected from the group of electrical power, equipment /furnishings, fire protection, flight controls, fuel system or hydraulic power.

According to another aspect, a method for installing a module in a cabin of a vehicle comprising an adaptive rail system is provided.

The method comprises the following steps. In a first step the vehicle with the cabin comprising the connection area is provided. In a second step the adaptive rail system is connected to the connection area. In a third step the module is attached to the jig. In fourth step the jig is moved to a desired location in the cabin of the vehicle. In a fifth step, the module is installed at the desired location in the cabin of the vehicle.

According to one embodiment, the method further comprises the step of removing the adaptive rail system after the step of installing the module.

Removing a rail system after installing a module with rail system may have several advantages, including:
Reduced weight: The removal of the rail system can reduce the overall weight of the vehicle, potentially leading to improved fuel efficiency and performance.

Increased space: Removing the rail system can create additional space in the vehicle, which can be used for other purposes such as additional storage or passenger seating.

Flexibility: By removing the rail system, the vehicle can become more versatile and adaptable, allowing for the installation of different types of modules and equipment as needed.

Lower maintenance costs: The removal of the rail system can simplify the maintenance process, reducing the need for specialized equipment and technicians.

Overall, removing a rail system after installing a module with rail system can offer a range of benefits that can improve the performance, efficiency, and safety of the vehicle.

### Brief description of the figures

Fig. 1 shows a schematic view of a vehicle with a cabin comprising an adaptive rail system; and
Fig. 2 shows a section of a lower part of an airplane; and
Fig. 3 shows a section of fuselage of an airplane with a conic section; and
Fig. 4 shows a method for installing a module in a cabin of a vehicle.

### Detailed description

The illustrations in the figures are schematic and not to scale. If the same reference signs are used in different figures in the following description of the figures, they designate identical or similar elements. However, identical or similar elements can also be designated by different reference symbols.

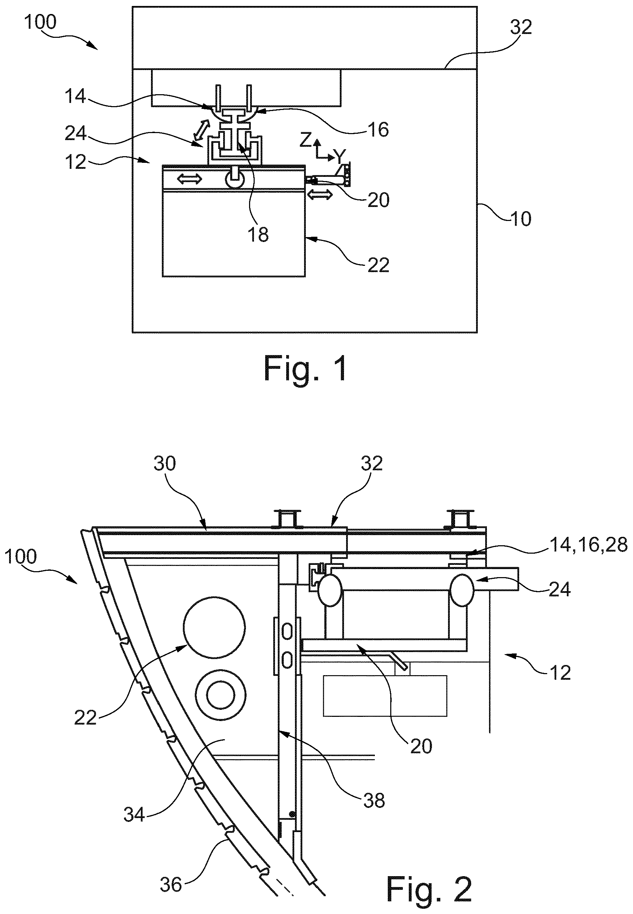

Fig. 1 shows a schematic view of a vehicle 100 with a cabin 10 comprising an adaptive rail system 12 . The cabin 10 comprises a connection area 14 adapted to hold the adaptive rail system 12.

The adaptive rail system 12 comprises a rail interface 16, configured to be attachable to the connection area 14, wherein the rail interface 16 is connected to a cross beam 30 of the vehicle 100. In Fig. 1, the adaptive rail system 12 further comprises an installation rail 18, configured to be attachable to the rail interface 16, whereby according to the claimed invention, it comprises two such installation rails. The adaptive rail system 12 further comprises a jig 20, wherein the jig 20 is connected to the two installation rails 18 in a moveable manner, such that a module 22 attached to the jig 20 is movable inside the cabin.

The jig 20 comprises a jig rail 22, wherein the jig rail 22 is adapted to move the jig 20 in a direction along an axis different to an axis defined by the two installation rails 18. The jig 20 further comprises a wheel based jig carrier 24, wherein the wheel based jig carrier 24 is adapted to guide the jig 20 along the axis defined by the two installation rails 18. The jig further comprises a motorized linear actuator (not shown).

Hence, the jig 20 is movable in three dimensions.

Further, the jig 20 comprises a mobile robot unit (not shown).

Fig. 2 shows a section of a lower part of an airplane 50. The airplane 50 comprises a floor structure 32, wherein the floor structure 32 comprises the connection area 14. The airplane 50 further comprises a triangle module 34 defined by a fuselage 36 and vertical struts 38, arranged in a lower part of the aircraft 50. The module 22 to be installed is configured to be installed in the triangle module 34.

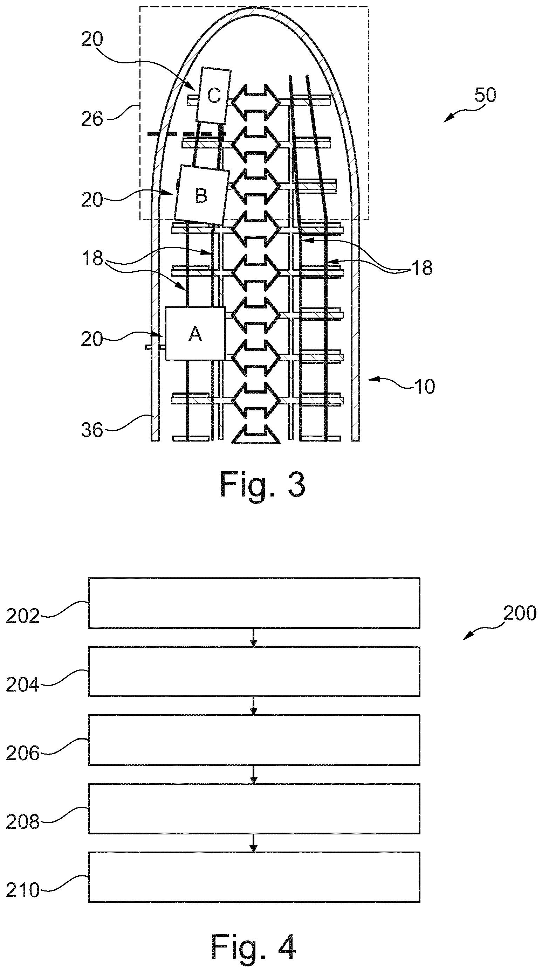

Fig. 3 shows a section of a lower part of the fuselage 36 of an airplane 50 with a cabin 10. The cabin 10 comprises a conic section 26, four installation rails 18, wherein the four installation rails 18 are configured to follow a shape of the conic section 26 of the cabin 10. The jig 20 attached to the installation rails 18 is shown in three different positions. In a first position A, the jig 20 is arranged in a section of the fuselage where all four installation rails 18 are straight and parallel to one another. If the jig 20 is moved to a position B, where the conic section 26 of the fuselage 36 begins, the available space of the jig 20 in the cabin 10 reduced. Due to the adaptability of the jig 20 in length and/or height and/or width, the outer dimensions of the jig 20 can be adjusted in such a manner, that the jig 20 can be guided along the rails by reducing the width of the jig 20. The conicity of the fuselage 36 increases until an outmost point of the fuselage 36, indicated by a position C. Since the available height for the jig 20 in the cabin 20 is also reduced at this point, the jig 20 can also be adjusted in height. In this embodiment, the adjustment in length and/or height and/or width is enabled by an electric motor (not shown), which operates a substructure of the jig 20 to change the dimensions of the jig 20.

Fig. 4 shows a method 200 for installing a module 22 in a cabin 10 of a vehicle. The method 200 for installing a module 22 in a cabin 10 of a vehicle 100 comprises an adaptive rail system 12 and comprises the following steps:
Providing 202 the vehicle 100 with the cabin 10 comprising the connection area 14,
Connecting 204 the adaptive rail system 12 to the connection area 14,
Attaching 206 the module 22 to the jig 20,
Moving 208 the jig 20 to a desired location in the cabin 10 of the vehicle 100,
Installing 210 the module 22 at the desired location in the cabin 10 of the vehicle 100.

In an optional step the method further comprises the following step:
Removing 210 the adaptive rail system 12 after the step of installing 210 the module 22.

Hence, the installation of a module in a cabin of a vehicle is facilitated to handle heavy modules safely.

### Reference Signs

- 100: vehicle
- 10: cabin
- 12: adaptive rails system
- 14: connection area
- 16: rail interface
- 18: installation rail
- 20: jig
- 22: module
- 24: wheel based jig carrier
- 26: conic section
- 28: crane
- 30: cross beam
- 32: floor structure
- 34: triangle module
- 36: fuselage
- 38: vertical struts
- 50: aircraft
- 200: method
- 202: providing
- 204: connecting
- 206: attaching
- 208: moving
- 210: installing

## Claims

1. Vehicle (100) with a cabin (10) comprising an adaptive rail system (12),
wherein the cabin (10) comprises a connection area (14) adapted to hold the adaptive rail system (12),
wherein the adaptive rail system (12) comprises:
a rail interface (16), configured to be attachable to the connection area (14), two installation rails (18), configured to be attachable to the rail interface (16), a jig (20), wherein the jig (20) is connected to the two installation rails (18) in a moveable manner, such that a module (22) attached to the jig (20) is movable inside the cabin (10),
wherein the cabin (10) comprises a conic section (26), and wherein the two installation rails are configured to follow a shape of the conic section (26) of the cabin (10).

2. Vehicle (100) according claim 1,
wherein the jig (20) comprises a jig rail (22), wherein the jig rail (22) is adapted to move the jig (20) in a direction along an axis different to an axis defined by the two installation rails (18).

3. Vehicle (100) according to one of the preceding claims,
wherein the jig (20) comprises a wheel based jig carrier (24), wherein the wheel based jig carrier (24) is adapted to guide the jig (20) along the axis defined by the two installation rails (18).

4. Vehicle (100) according to one of the preceding claims,
wherein the jig (20) comprises a motorized linear actuator.

5. Vehicle (100) according to one of the preceding claims,
wherein the jig (20) comprises a mobile robot unit.

6. Vehicle (100) according to claim 1,
wherein the jig (20) is adaptable in length and/or height and/or width such, that the jig (20) is movable along the conic section (26) of the cabin.

7. Vehicle (100) according to one of the preceding claims,
wherein the jig (20) comprises a crane (28), wherein the crane (28) is adapted to lift the jig (20) in a height adjustable manner.

8. Vehicle (100) according to one of the preceding claims,
wherein the rail interface (16) is connected to a cross beam (30) of the vehicle (100).

9. Vehicle (100) according to one of the preceding claims,
wherein the vehicle (100) is an airplane (50).

10. Vehicle (100) according to claim 9,
wherein the airplane (50) comprises a floor structure (32), wherein the floor structure (32) comprises the connection area (14).

11. Vehicle according to claim 10,
wherein the airplane (50) comprises a triangle module (34) defined by a fuselage (36) and vertical struts (38), arranged in a lower part of the aircraft (50),
wherein the module (22) to be installed is configured to be installed in the triangle module (34).

12. Vehicle according to claim 11,
wherein the module (22) is selected from the group of electrical power, equipment /furnishings, fire protection, flight controls, fuel system or hydraulic power.

13. Method (200) for installing a module (22) in a cabin (10) of a vehicle (100) comprising an adaptive rail system (12) according to one of the claims 1 to 12, comprising the following steps:
Providing (202) the vehicle (100) with the cabin (10) comprising the connection area (14),
Connecting (204) the adaptive rail system (12) to the connection area (14),
Attaching (206) the module (22) to the jig (20),
Moving (208) the jig (20) to a desired location in the cabin (10) of the vehicle (100),
Installing (210) the module (22) at the desired location in the cabin (10) of the vehicle (100).

14. Method (200) according to claim 13,
further comprising the following step:
Removing (210) the adaptive rail system (12) after the step of installing (210) the module (22).

## Patentansprüche

1. Fahrzeug (100) mit einer Kabine (10), umfassend ein adaptives Schienensystem (12), wobei die Kabine (10) einen Verbindungsbereich (14) umfasst, der angepasst ist, um das adaptive Schienensystem (12) zu halten, wobei das adaptive Schienensystem (12) umfasst: eine Schienenschnittstelle (16), die so konfiguriert ist, dass sie an dem Verbindungsbereich (14) befestigbar ist, zwei Installationsschienen (18), die so konfiguriert sind, dass sie an der Schienenschnittstelle (16) befestigbar sind, eine Montagevorrichtung (20), wobei die Montagevorrichtung (20) mit den zwei Installationsschienen (18) auf bewegliche Weise verbunden ist, sodass ein an der Montagevorrichtung (20) angebrachtes Modul (22) innerhalb der Kabine (10) bewegbar ist, wobei die Kabine (10) einen konischen Abschnitt (26) umfasst, und wobei die zwei Installationsschienen so konfiguriert sind, dass sie einer Form des konischen Abschnitts (26) der Kabine (10) folgen.

2. Fahrzeug (100) nach Anspruch 1, wobei die Montagevorrichtung (20) eine Vorrichtungsschiene (22) umfasst, wobei die Vorrichtungsschiene (22) angepasst ist, um die Montagevorrichtung (20) in einer Richtung entlang einer Achse zu bewegen, die sich von einer durch die zwei Installationsschienen (18) definierten Achse unterscheidet.

3. Fahrzeug (100) nach einem der vorhergehenden Ansprüche, wobei die Montagevorrichtung (20) einen radbasierten Vorrichtungsträger (24) umfasst, wobei der radbasierte Vorrichtungsträger (24) angepasst ist, um die Montagevorrichtung (20) entlang der durch die zwei Installationsschienen (18) definierten Achse zu führen.

4. Fahrzeug (100) nach einem der vorhergehenden Ansprüche, wobei die Montagevorrichtung (20) einen motorisierten Linearantrieb umfasst.

5. Fahrzeug (100) nach einem der vorhergehenden Ansprüche, wobei die Montagevorrichtung (20) eine mobile Robotereinheit umfasst.

6. Fahrzeug (100) nach Anspruch 1, wobei die Montagevorrichtung (20) in der Länge und/oder Höhe und/oder Breite derart anpassbar ist, dass die Montagevorrichtung (20) entlang des konischen Abschnitts (26) der Kabine bewegbar ist.

7. Fahrzeug (100) nach einem der vorhergehenden Ansprüche, wobei die Montagevorrichtung (20) einen Kran (28) umfasst, wobei der Kran (28) angepasst ist, um die Montagevorrichtung (20) in einer höhenverstellbaren Weise anzuheben.

8. Fahrzeug (100) nach einem der vorhergehenden Ansprüche, wobei die Schienenschnittstelle (16) mit einem Querträger (30) des Fahrzeugs (100) verbunden ist.

9. Fahrzeug (100) nach einem der vorhergehenden Ansprüche, wobei das Fahrzeug (100) ein Luftfahrzeug (50) ist.

10. Fahrzeug (100) nach Anspruch 9, wobei das Luftfahrzeug (50) eine Bodenstruktur (32) umfasst, wobei die Bodenstruktur (32) den Verbindungsbereich (14) umfasst.

11. Fahrzeug nach Anspruch 10, wobei das Luftfahrzeug (50) ein Dreiecksmodul (34) umfasst, das durch einen Rumpf (36) und vertikale Streben (38) definiert ist, die in einem unteren Teil des Luftfahrzeugs (50) angeordnet sind, wobei das zu installierende Modul (22) so konfiguriert ist, dass es in dem Dreiecksmodul (34) installiert wird.

12. Fahrzeug nach Anspruch 11, wobei das Modul (22) ausgewählt ist aus der Gruppe bestehend aus elektrischer Leistung, Ausrüstung/Inneneinrichtung, Brandschutz, Flugsteuerungen, Kraftstoffsystem oder hydraulischer Leistung.

13. Verfahren (200) zum Installieren eines Moduls (22) in einer Kabine (10) eines Fahrzeugs (100), umfassend ein adaptives Schienensystem (12) nach einem der Ansprüche 1 bis 12, umfassend die folgenden Schritte:
Bereitstellen (202) des Fahrzeugs (100) mit der Kabine (10), die den Verbindungsbereich (14) umfasst,
Verbinden (204) des adaptiven Schienensystems (12) mit dem Verbindungsbereich (14),
Anbringen (206) des Moduls (22) an der Montagevorrichtung (20),
Bewegen (208) der Montagevorrichtung (20) an eine gewünschte Stelle in der Kabine (10) des Fahrzeugs (100),
Installieren (210) des Moduls (22) an der gewünschten Stelle in der Kabine (10) des Fahrzeugs (100).

14. Verfahren (200) nach Anspruch 13, ferner umfassend den folgenden Schritt: Entfernen (210) des adaptiven Schienensystems (12) nach dem Schritt des Installierens (210) des Moduls (22).

## Revendications

1. Véhicule (100) doté d'une cabine (10) comprenant un système de rails adaptatif (12), dans lequel la cabine (10) comprend une zone de liaison (14) adaptée pour maintenir le système de rails adaptatif (12), dans lequel le système de rails adaptatif (12) comprend: une interface de rail (16), configurée pour pouvoir être fixée à la zone de liaison (14), deux rails d'installation (18), configurés pour pouvoir être fixés à l'interface de rail (16), un gabarit (20), dans lequel le gabarit (20) est relié aux deux rails d'installation (18) de manière mobile, de sorte qu'un module (22) fixé au gabarit (20) soit mobile à l'intérieur de la cabine (10), dans lequel la cabine (10) comprend une section conique (26), et dans lequel les deux rails d'installation sont configurés pour suivre une forme de la section conique (26) de la cabine (10).

2. Véhicule (100) selon la revendication 1, dans lequel le gabarit (20) comprend un rail de gabarit (22), dans lequel le rail de gabarit (22) est adapté pour déplacer le gabarit (20) dans une direction le long d'un axe différent d'un axe défini par les deux rails d'installation (18).

3. Véhicule (100) selon l'une des revendications précédentes, dans lequel le gabarit (20) comprend un support de gabarit sur roues (24), dans lequel le support de gabarit sur roues (24) est adapté pour guider le gabarit (20) le long de l'axe défini par les deux rails d'installation (18).

4. Véhicule (100) selon l'une des revendications précédentes, dans lequel le gabarit (20) comprend un actionneur linéaire motorisé.

5. Véhicule (100) selon l'une des revendications précédentes, dans lequel le gabarit (20) comprend une unité robotique mobile.

6. Véhicule (100) selon la revendication 1, dans lequel le gabarit (20) est adaptable en longueur et/ou en hauteur et/ou en largeur de sorte que le gabarit (20) soit mobile le long de la section conique (26) de la cabine.

7. Véhicule (100) selon l'une des revendications précédentes, dans lequel le gabarit (20) comprend une grue (28), dans lequel la grue (28) est adaptée pour soulever le gabarit (20) d'une manière réglable en hauteur.

8. Véhicule (100) selon l'une des revendications précédentes, dans lequel l'interface de rail (16) est reliée à une traverse (30) du véhicule (100).

9. Véhicule (100) selon l'une des revendications précédentes, dans lequel le véhicule (100) est un avion (50).

10. Véhicule (100) selon la revendication 9, dans lequel l'avion (50) comprend une structure de plancher (32), dans lequel la structure de plancher (32) comprend la zone de liaison (14).

11. Véhicule selon la revendication 10, dans lequel l'avion (50) comprend un module triangulaire (34) défini par un fuselage (36) et des montants verticaux (38), disposés dans une partie inférieure de l'avion (50), dans lequel le module (22) à installer est configuré pour être installé dans le module triangulaire (34).

12. Véhicule selon la revendication 11, dans lequel le module (22) est choisi dans le groupe comprenant la puissance électrique, l'équipement/ameublement, la protection contre l'incendie, les commandes de vol, le système de carburant ou la puissance hydraulique.

13. Procédé (200) d'installation d'un module (22) dans une cabine (10) d'un véhicule (100) comprenant un système de rails adaptatif (12) selon l'une des revendications 1 à 12, comprenant les étapes suivantes:
Fournir (202) le véhicule (100) avec la cabine (10) comprenant la zone de liaison (14), Connecter (204) le système de rails adaptatif (12) à la zone de liaison (14),
Fixer (206) le module (22) au gabarit (20),
Déplacer (208) le gabarit (20) vers un emplacement souhaité dans la cabine (10) du véhicule (100),
Installer (210) le module (22) au niveau de l'emplacement souhaité dans la cabine (10) du véhicule (100).

14. Procédé (200) selon la revendication 13, comprenant en outre l'étape suivante: Retirer (210) le système de rails adaptatif (12) après l'étape d'installation (210) du module (22).
